# EUROPEAN PATENT APPLICATION

(11) **EP 3 050 681 A1**
(43) Date of publication of application: **03.08.2016**
(21) Application number: 16152698.3
(22) Date of filing: 26.01.2016
(51) Int. Cl.: B25J 9/12, B25J 19/00, B25J 9/10, B25J 9/00, B25J 9/04

(54) **ROBOT**

(30) Priority: 29.01.2015 JP 2015015706
(71) Applicant: Kabushiki Kaisha Yaskawa Denki, Kitakyushu-shi, Fukuoka 806-0004 (JP)
(72) Inventor: SUEYOSHI, Satoshi, Kitakyushu-shi Fukuoka 806-0004 (JP); IZAWA, Tamon, Kitakyushu-shi Fukuoka 806-0004 (JP); SAITO, Hiroshi, Kitakyushu-shi Fukuoka 806-0004 (JP); SANADA, Takashi, Kitakyushu-shi Fukuoka 806-0004 (JP); HANIYA, Kazuhiro, Kitakyushu-shi Fukuoka 806-0004 (JP)
(74) Representative: Viering, Jentschura & Partner mbB Patent- und Rechtsanwälte

(57) **Abstract**

A robot (1) includes a base (3). A turnable portion (5) is mounted on the base and turnable about a first axis (Ax1) approximately perpendicular to an installation surface on which the base (3) is disposed. An arm (7) is mounted on the turnable portion (5) and swingable about a second axis (Ax2) parallel to the installation surface. A first motor (20) is accommodated in the turnable portion (5) and moves the turnable portion about the first axis (Ax1). A first motor includes a body (30) and a protrusion (70). The body (30) has an axial dimension that is in a direction along an output shaft (Ax) of the first motor (20) and that is smaller than a perpendicular dimension in a direction approximately perpendicular to the output shaft (Ax). The protrusion (70) protrudes from a surface of the body (30) in a direction along the output shaft (Ax) and is displaced from the output shaft (Ax). A second motor (20) moves the arm (7) about the second axis (Ax2).

## Description

### BACKGROUND

### FIELD OF THE INVENTION

The present invention relates to a robot.

### DISCUSSION OF THE BACKGROUND

Japanese Unexamined Patent Application Publication No. 2003-200376 discloses an industrial robot that includes a base, a turnable base, a lower arm, and an upper arm. The turnable base turns about an S axis relative to the base. The lower arm swings about an L axis relative to the turnable base. The upper arm swings about a U axis relative to the lower arm. The lower arm operates by a motor that is coaxial with the L axis, and the upper arm operates by a motor that is coaxial with the U axis. The turnable base operates by a motor that is coaxial with the S axis. The lower arm operates by a motor that is coaxial with the L axis. The upper arm operates by a motor that is coaxial with the U axis.

The contents of Japanese Unexamined Patent Application Publication No. 2003-200376 are incorporated herein by reference in their entirety.

Wider movable ranges have been required of robots so as to enable the robots to operate in as wide areas as possible. For wider movable ranges of the robots, it is effective to increase the swing angle of the lower arm swingably mounted on the turnable base. The swing angle of the lower arm, however, is restricted because the swing angle of the lower arm is set to avoid contact between the turnable base and the lower arm. Thus, increasing the swing angle of the lower arm necessitates avoiding contact between the turnable base and the lower arm. In order to avoid contact between the turnable base and the lower arm, it is necessary to arrange the L axis at a position higher than the turnable base or arrange the output of axis of a motor that drives the turnable base at a position displaced from the S axis so as to lower the height of the turnable base. Both of these configurations, however, involve some increase in size of the apparatus.

It is an object of the present disclosure to provide a robot having a wider movable range while preventing an increase in size of the apparatus.

### SUMMARY

According to one aspect of the present disclosure, a robot includes a base, a turnable portion, an arm, a first motor, and a second motor. The turnable portion is mounted on the base and turnable about a first axis approximately perpendicular to an installation surface on which the base is disposed. The arm is mounted on the turnable portion and swingable about a second axis parallel to the installation surface. The first motor is accommodated in the turnable portion and configured to move the turnable portion about the first axis relative to the base. The first motor includes a body and a protrusion. The body includes an axial dimension in a direction along an output shaft of the first motor and a perpendicular dimension in a direction approximately perpendicular to the output shaft of the first motor. The axial dimension is smaller than the perpendicular dimension. The protrusion protrudes from a first surface of the body in a direction along the output shaft of the first motor and is disposed at a position displaced from the output shaft of the first motor. The second motor is configured to move the arm about the second axis relative to the turnable portion.

The present disclosure ensures a wider movable range of a robot while reducing the size of the robot.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a perspective view of a robot according to an embodiment;
FIG. 2 is a side view of the robot illustrated in FIG. 1;
FIG. 3 is a rear view of the robot illustrated in FIG. 1;
FIG. 4 is a perspective view of a motor illustrating an external appearance of the motor;
FIG. 5 is a cross-sectional view of the motor;
FIG. 6 illustrates an internal configuration of a base and a turnable portion; and
FIG. 7 illustrates where the motor is arranged.

### DESCRIPTION OF THE EMBODIMENTS

The embodiments will now be described with reference to the accompanying drawings, wherein like reference numerals designate corresponding or identical elements throughout the various drawings.

### Configuration of Robot

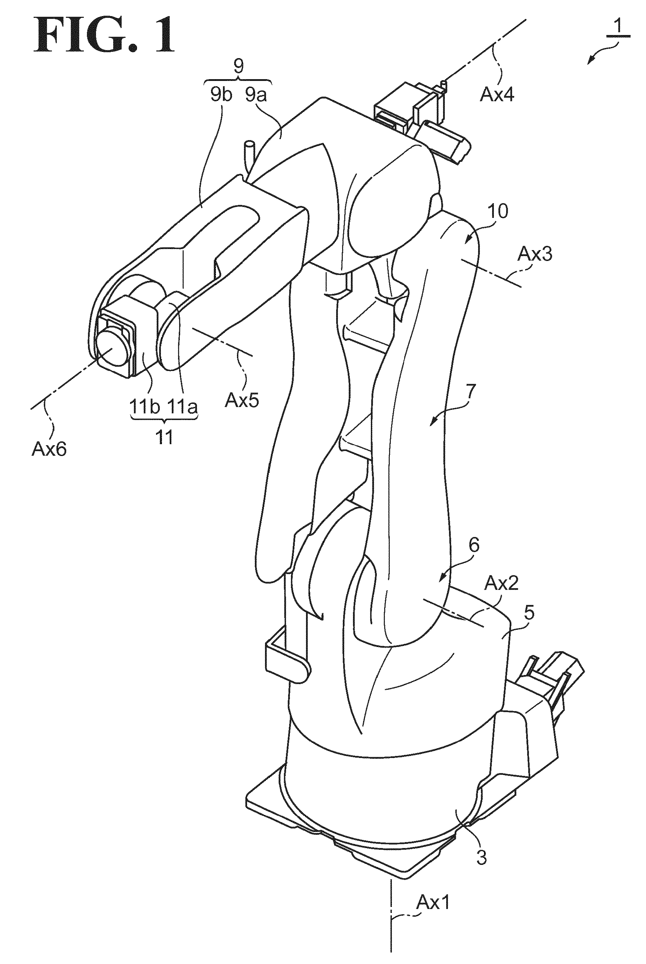

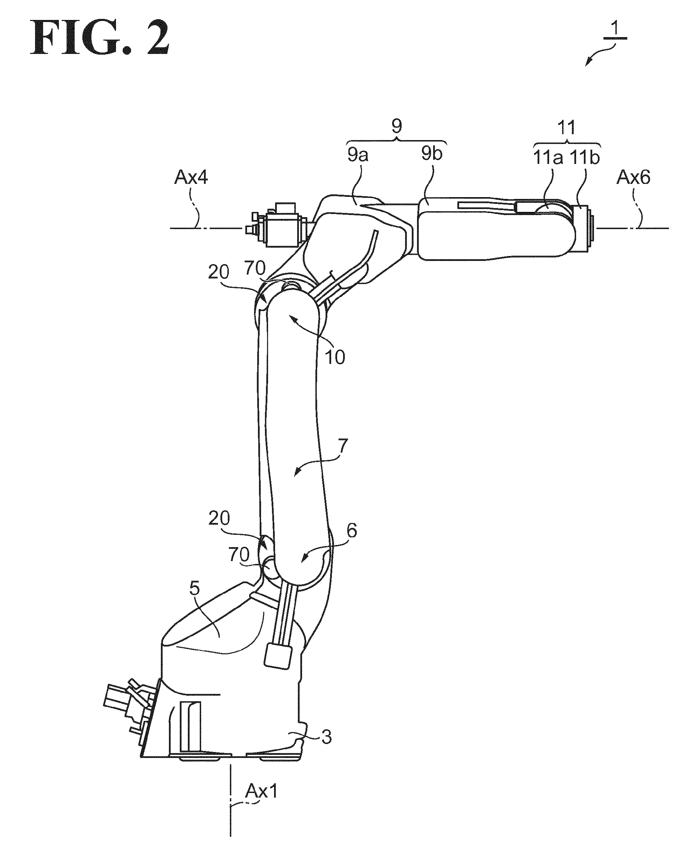

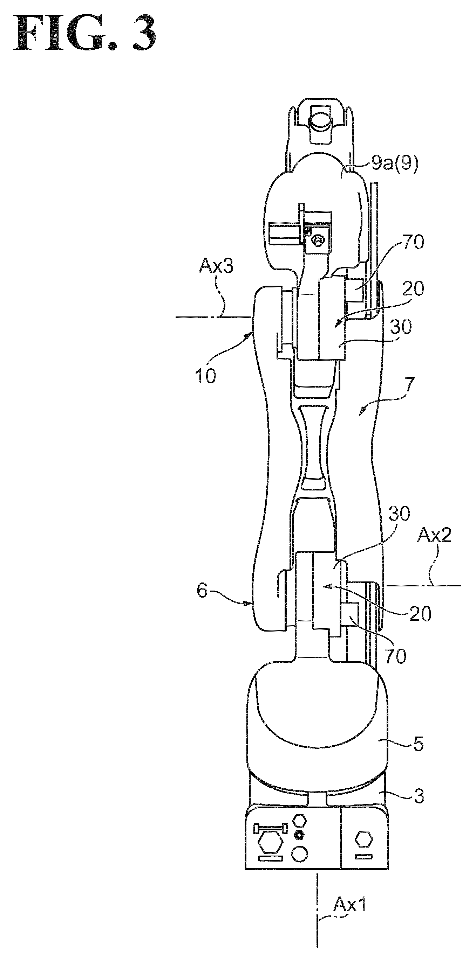

FIG. 1 is a perspective view of a robot according to this embodiment. FIG. 2 is a side view of the robot illustrated in FIG. 1. FIG. 3 is a rear view of the robot illustrated in FIG. 1. The robot, 1, illustrated in the drawings is an industrial robot that works on workpieces, not illustrated.

As illustrated in FIGs. 1 to 3, the robot 1 includes a base 3, a turnable portion 5, a first arm 7, a second arm 9, and an end base 11. The base 3, the turnable portion 5, the first arm 7, the second arm 9, and the end base 11 are coupled to each other in this order from the base end of the robot 1 to the distal end of the robot 1.

The base 3 is fixed to an installation surface and supports the entire robot 1.

The turnable portion 5 is disposed on the base 3. The turnable portion 5 is turnable about a turning axis, namely, a first axis Ax1, which extends in the vertical direction, relative to the base 3. The turnable portion 5 is driven into turning operation about the first axis Ax1 by a power source, namely, a first motor, which is accommodated in the turnable portion 5. The first axis Ax1 will be occasionally referred to as "S axis".

The first arm 7 is swingable about a swing axis, namely, a second axis Ax2 relative to the turnable portion 5. The second axis Ax2 passes through a connection portion 6 (the end of the first arm 7 on the side of the turnable portion 5), at which the turnable portion 5 and the first arm 7 are coupled to each other. The connection portion 6, at which the turnable portion 5 and the first arm 7 are coupled to each other, is equipped with a second motor.

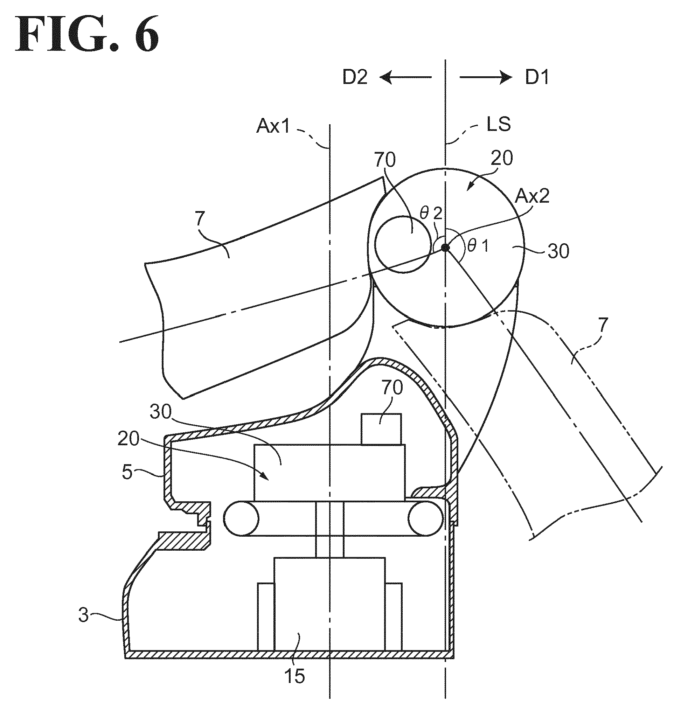

The first arm 7 is driven by a power source, namely, the second motor, which is parallel to the installation surface, into swing operation about the second axis Ax2. Specifically, as illustrated in FIG. 6, the first arm 7 is swingable in a first direction *D1* (frontward) up to a first swing angle θ*1* relative to a reference line LS. The reference line LS is in a direction approximately perpendicular to the installation surface and passes through the second axis Ax2. The first arm 7 is also swingable relative to the reference line LS in a second direction *D*2 (rearward), which is opposite to the first direction *D1*, up to a second swing angle θ2. The second swing angle θ2 is smaller than the first swing angle θ1 (θ*1* > θ2). In a view from a direction along the second axis Ax2, the first axis Ax1 is disposed at a position that is further in the second direction *D2* than the reference line LS. The second axis Ax2 will be occasionally referred to as "L axis".

The second arm 9 includes a base end 9a and a distal end 9b. The base end 9a is on the side of the first arm 7, and the distal end 9b is on the side of the end base 11. The base end 9a is swingable about a swing axis, namely, a third axis Ax3 relative to the first arm 7. The third axis Ax3 passes through a connection portion 10 (the end of the first arm 7 on the side of the base end 9a), at which the first arm 7 and the second arm 9 are coupled to each other. This configuration makes the second arm 9 as a whole swingable about the third axis Ax3 relative to the first arm 7. The connection portion 10, at which the first arm 7 and the second arm 9 are coupled to each other, is equipped with a third motor. The second arm 9 (base end 9a) is driven by a power source, namely, the third motor, into swing operation about the third axis Ax3. The third axis Ax3 extends in parallel to the second axis Ax2. The third axis Ax3 will be occasionally referred to as "U axis".

The distal end 9b is turnable about a turning axis, namely, a fourth axis Ax4, relative to the base end 9a. The fourth axis Ax4 passes through the center of the second arm 9. The distal end 9b is driven by a power source, namely, a fourth motor, into turning operation about the fourth axis Ax4. The fourth axis Ax4 will be occasionally referred to as "R axis".

The end base 11 includes a base end 11a and a distal end 11b. The base end 11a is on the side of the second arm 9, and the distal end 11b is on the side of the distal end of the robot 1. The base end 11a is swingable about a swing axis, namely, a fifth axis Ax5 relative to the distal end 9b. The fifth axis Ax5 passes through a connection portion at which the second arm 9 (distal end 9b) and the end base 11 (base end 11a) are coupled to each other. The base end 11a is driven by a power source, namely, a fifth motor, into swing movement about the fifth axis Ax5. The fifth axis Ax5 will be occasionally referred to as "B axis".

The distal end 11b is mounted on the base end 11a in a rotatable manner about a rotation axis, namely, a sixth axis Ax6, relative to the base end 11a. The sixth axis Ax6 passes through the center of the end base 11. The distal end 11b is driven by a power source, namely, a sixth motor, into rotational movement about the sixth axis Ax6. The sixth axis Ax6 will be occasionally referred to as "T axis". An end effector is attachable to the end base 11. A non-limiting example of the end effector is a welding torch.

### Configurations of Motors

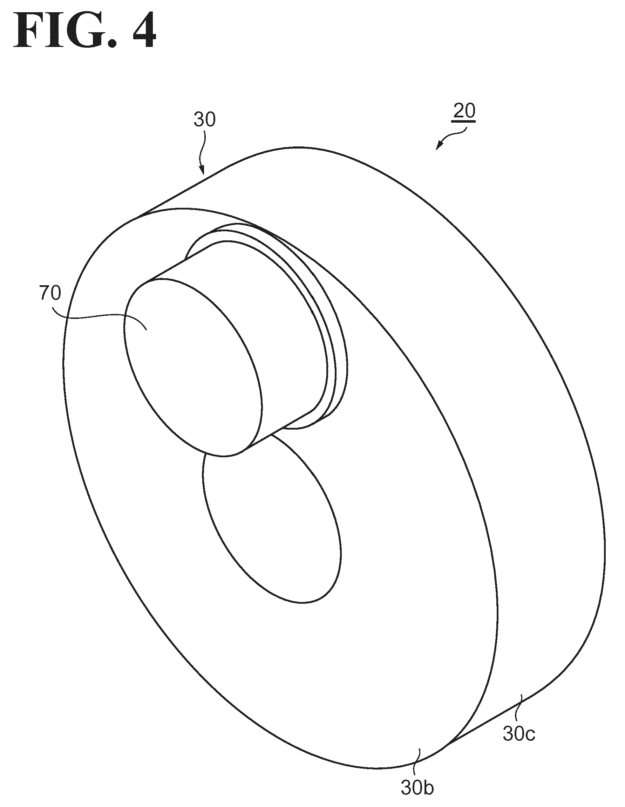

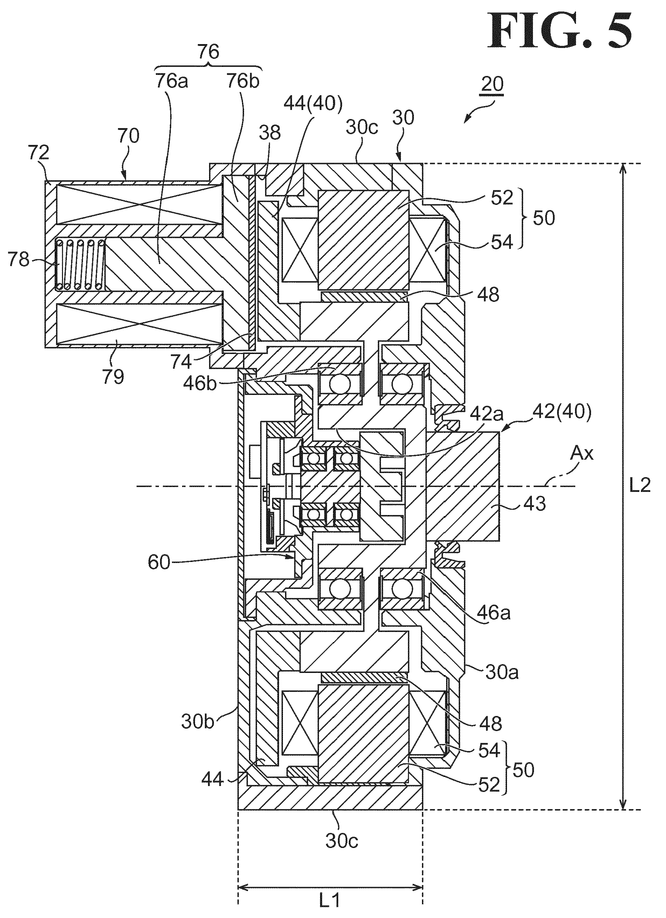

Next, the first to sixth motors provided in the robot 1 will be described in detail. The first to sixth motors have similar configurations and may hereinafter occasionally be referred to as "motor 20" collectively. FIG. 4 is a perspective view of the motor illustrating an external appearance of the motor 20. FIG. 5 is a cross-sectional view of the motor 20. As illustrated in FIGs. 4 and 5, the motor 20 includes a casing (body) 30, a rotor 40, a stator 50, an encoder 60, and a brake (protrusion) 70.

The casing 30 holds elements such as the rotor 40, the stator 50, and the encoder 60. In this embodiment, the casing 30 has a circular outer shape. The casing 30 includes a first surface 30a (second surface), a second surface (first surface) 30b, and a third surface 30c. The first surface 30a and the second surface 30b are orthogonal to the output shaft, Ax, of the motor 20. The third surface 30c has a circular shape extending along the output shaft Ax. The casing 30 has an axial dimension in a direction along the output shaft Ax of the motor 20 and a perpendicular dimension in direction approximately perpendicular to the output shaft Ax. The axial dimension is smaller than the perpendicular dimension. Specifically, the casing 30 has such a flat shape that dimension *L1*, which is between the first surface 30a and the second surface 30b, is smaller than dimension *L2*, which is the diameter of the third surface 30c (*L1 < L2*). In this embodiment, the dimension *L1* is equal to or less than half the dimension *L2*.

The rotor 40 includes a rotator 42 and a brake pad 44. The rotator 42 is a member that can be driven into rotation about the output shaft Ax. The rotator 42 is rotatable by ring-shaped bearings 46a and 46b, which are fixed to the casing 30. The bearings 46a and 46b are aligned in a direction along the output shaft Ax with a predetermined distance between the bearings 46a and 46b. On the outer surface of the rotor 40, magnets 48 are aligned in the circumferential direction. The rotator 42 includes a shaft member 43. The shaft member 43 protrudes from the first surface 30a of the casing 30.

The brake pad 44 is a member that performs braking operation as controlled by the brake 70. The brake pad 44 is disposed over the circumference of the rotator 42. The brake pad 44 has a ring shape. The brake pad 44 is coaxial with the output shaft Ax. The outer edge of the brake pad 44 is further outward than the outer edge of the rotator 42. That is, the outer diameter of the brake pad 44 is larger than the outer diameter of the rotator 42. In this embodiment, the brake pad 44 is made of metal.

The stator 50 is a member that imparts rotational force to the rotor 40. The stator 50 includes a core 52 and a coil 54. In this embodiment, the core 52 has a ring shape. The core 52 faces the outer surface of the rotator 42. The coil 54 is disposed on the core 52.

The encoder 60 is a rotation detector that detects the rotation of the rotor 40. A non-limiting example of the encoder 60 is a rotary encoder capable of detecting amounts by which the motor 20 is driven, such as the number of rotations of the rotor 40, the rotational angle of the rotor 40, and/or the rotational speed of the rotor 40. The encoder 60 is partially disposed in a depression 42a of the rotator 42.

The brake 70 is a braking device that causes the rotating rotor 40 to brake. The brake 70 protrudes outward from the second surface 30b of the casing 30 along the output shaft Ax. The brake 70 is decentered from the output shaft Ax. The brake 70 includes a case 72, a friction material 74, a holding member 76, a biasing member 78, and a coil 79.

The case 72 accommodates the holding member 76, the biasing member 78, and the coil 79. In this embodiment, the case 72 is fixed to the casing 30 with a screw. In the embodiment illustrated in FIG. 4, the case 72 has a solid cylindrical outer shape. The case 72 may be designed into any convenient shape.

The friction material 74 comes into sliding contact with the brake pad 44 of the rotor 40 to impart frictional force to the brake pad 44. The friction material 74 is disposed on the holding member 76. Examples of the material of the friction material 74 include, but are not limited to, resin mold, semi-metallic material, and sintered alloy (of iron and/or copper).

The holding member 76 holds the friction material 74. In this embodiment, the holding member 76 is made of metal. The holding member 76 has an approximately T shape. The holding member 76 includes a body 76a and a holder 76b.

In this embodiment, the body 76a has a solid cylindrical shape. The body 76a extends in the direction along the output shaft Ax. In this embodiment, the holder 76b has a disc shape. The holder 76b is disposed on one end (the end closer to the brake pad 44) of the body 76a. The outer diameter of the holder 76b is larger than the outer diameter of the body 76a. The holder 76b faces the brake pad 44 of the rotor 40. That is, the friction material 74 faces the brake pad 44.

The holding member 76 is movable (sliding-movable) in the direction along the output shaft Ax. Specifically, the holding member 76 is movable between a first position (initial position) and a second position. At the first position, the holder 76b contacts the coil 79. At the second position, the friction material 74 sliding-contacts the brake pad 44.

The biasing member 78 biases the holding member 76. In this embodiment, the biasing member 78 is a coil spring. The biasing member 78 is disposed on the other end of the body 76a of the holding member 76. When the holding member 76 is at the first position, the biasing member 78 biases the holding member 76 toward the rotor 40.

The coil 79 regulates the movement of the holding member 76. The coil 79 surrounds the body 76a of the holding member 76. When current is supplied through the coil 79, the coil 79 effects electromagnetic force against the biasing force of the biasing member 78 to pull the holder 76b and holds the holding member 76 at the first position. When no current is supplied through the coil 79, the coil 79 releases the holding member 76.

When supply of current through the coil 79 is discontinued, the brake 70 with the above-described configuration causes the coil 79 to release the holding member 76, and allows the biasing force of the biasing member 78 to move the holding member 76 toward the rotor 40. That is, the brake 70 positions the holding member 76 at the second position. Then, the brake 70 causes the friction material 74 to sliding-contact the brake pad 44 to impart frictional force to the brake pad 44. This configuration causes the rotating rotor 40 to decelerate or stop and prevents the stationary rotor 40 from rotating.

When current is supplied through the coil 79, the brake 70 causes the coil 79 to pull the holding member 76 to separate the friction material 74 and the brake pad 44 from each other. That is, the brake 70 positions the holding member 76 at the first position. This configuration makes the rotor 40 rotatable.

### Motor Arrangement

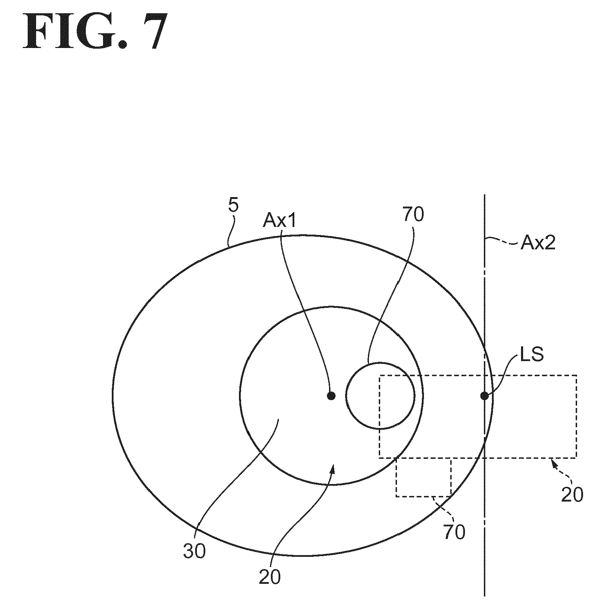

Next, arrangement of the motor 20 (first motor) with the above-described configuration will be described. FIG. 6 illustrates an internal configuration of the base 3 and the turnable portion 5. FIG. 7 illustrates where the motor 20 is arranged.

As illustrated in FIG. 6, the first motor 20 is accommodated in the turnable portion 5 and is fixed to the turnable portion 5. Specifically, the first motor 20 is arranged with the first surface 30a of the casing 30 facing the installation surface. Specifically, the motor 20 is disposed in the turnable portion 5 with the brake 70 facing upward. The first motor 20 is fixed to the turnable portion 5 with the output shaft Ax of the first motor 20 coaxial with the first axis Ax1. This configuration makes the first motor 20 rotatable together with the turnable portion 5. The brake 70 of the first motor 20 is disposed on the casing 30 and between the first axis Ax1 and the reference line LS. More specifically, the brake 70 is on a line that connects the first axis Ax1 and the reference line LS to each other.

The first motor 20 is coupled to a reducer 15. The reducer 15 is disposed in the base 3 and is fixed to the base 3. The input shaft of the reducer 15 is coaxial with the output shaft Ax of the first motor 20. Specifically, the output shaft Ax of the first motor 20 and the input shaft of the reducer 15 are coaxial with the first axis Ax1.

### Advantageous Effects

As has been described hereinbefore, in the robot 1 according to this embodiment, the casing 30 of the motor 20 has a smaller axial dimension, which is in the direction along the output shaft Ax, than the perpendicular dimension of the casing 30 in the direction approximately perpendicular to the output shaft Ax. That is, the casing 30 has a flat shape. The brake 70 is disposed at a position displaced from the output shaft Ax. Thus, the motor 20 has a flat casing 30 and a brake 70 offset from the output shaft Ax, and the motor 20 is disposed with its output shaft Ax parallel to the first axis Ax1. This configuration decreases the dimension of the motor 20 motor 20 in the direction along the first axis Ax1 of the turnable portion 5, which accommodates the motor 20 (that is, the height dimension of the motor 20). This configuration avoids contact between the first arm 7 and the turnable portion 5 and increases the second swing angle θ*2* of the first arm 7. This, as a result, widens the movable range of the robot while preventing an increase in size of the apparatus.

In this embodiment, the first motor 20 is fixed to the turnable portion 5 and is rotatable together with the turnable portion 5. This configuration keeps the position relationship between the first motor 20 and the turnable portion 5 unchanged even while the turnable portion 5 is turning. This eliminates or minimizes complications in the turnable portion 5, such as wiring of the cables.

In this embodiment, the output shaft Ax of the first motor 20 is coaxial with the first axis Ax1, and the second surface 30b of the casing 30, which is opposite to the first surface 30a, faces the installation surface. The first arm 7 is swingable in the first direction *D1* up to the first swing angle *θ1* relative to the reference line LS, which is in the direction approximately perpendicular to the installation surface and which passes through the second axis Ax2. The first arm 7 is also swingable relative to the reference line LS in the second direction *D2*, which is opposite to the first direction *D1*, up to the second swing angle θ*2*. In a view from the direction along the second axis Ax2, the first axis Ax1 is disposed at a position that is further in the second direction *D*2 than the reference line LS. The brake 70 of the first motor 20 is disposed on the casing 30 and between the first axis Ax1 and the reference line LS. Thus, the brake 70 is disposed on the side of the first arm 7. This configuration involves increasing the height dimension of the turnable portion 5, which accommodates the first motor 20, only at a portion that is on the side of the first arm 7 in accordance with the brake 70. That is, it is not necessary to increase the height dimensions of portions of the turnable portion 5 that are further away from the first arm 7. This configuration avoids contact between the first arm 7 and the turnable portion 5 while the first arm 7 is swinging in the second direction *D*2, and thus increases the second swing angle θ*2*. This, as a result, widens the movable range of the robot.

In this embodiment, the robot 1 includes the reducer 15. The reducer 15 is coupled to the first motor 20 and has an input shaft coaxial with the output shaft Ax. The reducer 15 is fixed to the base 3. This configuration eliminates or minimizes an increase in size of the turnable portion 5 and the base 3 in the width direction. This, as a result, minimizes the interference radius of the turnable portion 5 while the turnable portion 5 is turning.

The above-described embodiment should not be construed in a limiting sense. For example, while the above-described embodiment has been described as including the first arm 7 and the second arm 9, an additional arm may be coupled to the second arm 9.

While in the above-described embodiment the motor 20 has been described as having the configuration illustrated in FIG. 5, this configuration of the motor 20 should not be construed in a limiting sense.
1 Robot
3 Base
5 Turnable portion
7 First arm
15 Reducer
20 Motor (first motor, second motor)
30 Casing (body)
30a First surface (second surface)
30b Second surface (first surface)
70 Brake (protrusion)
Ax Output shaft
Ax1 First axis
Ax2 Second axis
LS Reference line

## Claims

1. A robot (1), **characterized by**:
a base (3);
a turnable portion (5) mounted on the base (3) and turnable about a first axis approximately perpendicular to an installation surface on which the base (3) is disposed;
an arm (7) mounted on the turnable portion (5) and swingable about a second axis parallel to the installation surface;
a first motor (20) accommodated in the turnable portion (5) and configured to move the turnable portion (5) about the first axis relative to the base (3), the first motor (20) comprising:
a body (30) comprising an axial dimension in a direction along an output shaft of the first motor (20) and a perpendicular dimension in a direction approximately perpendicular to the output shaft of the first motor (20), the axial dimension being smaller than the perpendicular dimension; and
a protrusion (70) protruding from a first surface of the body (30) in a direction along the output shaft of the first motor (20) and disposed at a position displaced from the output shaft of the first motor (20); and
a second motor (20) configured to move the arm (7) about the second axis relative to the turnable portion (5).

2. The robot (1) according to claim 1, wherein the first motor (20) is fixed to the turnable portion (5) and rotatable together with the turnable portion (5).

3. The robot (1) according to claim 2,
wherein the output shaft of the first motor (20) is coaxial with the first axis, and a second surface of the body (30) opposite to the first surface faces the installation surface,
wherein the arm (7) is swingable in a first direction up to a first swing angle relative to a reference line that is in a direction approximately perpendicular to the installation surface and that passes through the second axis, and the arm (7) is swingable relative to the reference line in a second direction opposite to the first direction up to a second swing angle, and
wherein in a view from a direction along the second axis, the first axis is disposed at a position that is further in the second direction than the reference line, and the protrusion (70) of the first motor (20) is disposed on the body (30) and between the first axis and the reference line.

4. The robot (1) according to any one of claims 1 to 3, further comprising a reducer coupled to the first motor (20) and comprising an input shaft coaxial with the output shaft, the reducer being fixed to the base (3).
